(19) Europäisches Patentamt
European Patent Office
Office européen des brevets

(11) **EP 4 663 787 A1**

(12) **EUROPEAN PATENT APPLICATION**

(43) Date of publication:
17.12.2025 Bulletin 2025/51

(21) Application number: 24182005.9

(22) Date of filing: 13.06.2024

(51) International Patent Classification (IPC):
*C22B 3/44* (2006.01)   *C22B 7/00* (2006.01)
*C22B 26/12* (2006.01)   *H01M 4/525* (2010.01)
*H01M 10/052* (2010.01)   *H01M 10/54* (2006.01)
*C22B 3/00* (2006.01)   *C22B 47/00* (2006.01)

(52) Cooperative Patent Classification (CPC):
**C22B 7/007; C22B 3/44; C22B 23/043;
C22B 26/12; C22B 47/00; H01M 4/525;
H01M 10/052; H01M 10/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Solvay SA**
**1120 Brussels (BE)**

(72) Inventors:
• **LACADENA, Maria José**
**1120 Brussels (BE)**
• **VASQUEZ, Oscar**
**Banksmeadow NSW, 2019 (AU)**
• **JAMES, Alun Pryce**
**Warrington, WA4 6HA (GB)**

(74) Representative: **Kraus & Lederer PartGmbB**
**Thomas-Wimmer-Ring 15**
**80539 München (DE)**

(54) **MANGANESE SEPARATION FROM BLACK MASS FROM RECYCLED LI-ION BATTERIES WITH A SULFUR-CONTAINING INORGANIC PERACID**

(57) The present invention relates to a method for recovering metals from a black mass from spent lithium-ion batteries. In particular, it relates to a method for leaching Co, Ni and Li from a solid S obtainable from a black mass from spent Li-ion batteries, said solid S comprising Ni, Co, Mn and Li, said method comprising contacting the solid S with a sulfur-containing inorganic peracid, such as Caro's acid (peroxymonosulfuric acid), thereby obtaining a solution C comprising Co, Ni, and Li on the one hand, and a solid S" comprising Mn on the other hand.

FIG. 1

## Description

### TECHNICAL FIELD

The present invention relates to a method for recovering metals from a black mass from spent lithium-ion batteries. In particular, it relates to a method for treating black mass with a sulfur-containing inorganic peracid to obtain a solution comprising Co, Ni, and Li and a solid comprising Mn.

### TECHNICAL BACKGROUND

Lithium-ion batteries are crucial for modern technology due to their high energy density, long lifespan, and lightweight properties. They power a wide range of devices, from smartphones and laptops to electric vehicles and renewable energy storage systems. Their efficiency and ability to be recharged make them essential for reducing reliance on fossil fuels and advancing clean energy initiatives. Additionally, lithium-ion batteries play a pivotal role in the development of sustainable transportation and the overall push towards a greener, more energy-efficient future.

For further sustainability, recycling of lithium-ion batteries is important. Recycling lithium-ion batteries conserves valuable and finite resources like lithium, cobalt, nickel, manganese, and copper, and reduces the need for new mining and its associated environmental impact. Recycling also mitigates the environmental hazards posed by improper disposal of batteries, such as soil and water contamination. Additionally, it supports the circular economy by reintroducing materials back into the manufacturing process, promoting sustainability.

Lithium-ion batteries consist of valuable metals such as lithium, copper, manganese, cobalt, and nickel. When these batteries reach the end of their life, they can be collected, fully discharged, shredded, and have their base metals separated for recycling. This resulting shiny, metallic mixture is known as 'black mass'. It contains all the valuable metals from the battery anodes and cathodes, which are the most expensive components of a battery. The typical black colour comes from the high concentrations of graphite in the battery anodes, which is very dark black. For instance, black mass constitutes about 40-50% of the total weight of an electric vehicle (EV) battery. Before recycling, materials like the binder, copper, electrolytes, plastics, aluminium, and steel are physically separated out by shredders. What remains is a mixture that appears black with silvery metallic flecks throughout.

In 2023, the European Union designated manganese (Mn) as a critical raw material. Consequently, researchers and companies are actively exploring alternative sources for these essential materials, with recycling playing a crucial role in fostering a circular economy for these resources. For the separation of manganese from lithium-ion battery black mass, it has been reported that manganese can be separated from the rest of the metals by precipitation, with oxidants like $KMnO_4$, ozone or $Na_2S_2O_8$, or by solvent extraction, like di-2-ethylhexyl phosphoric acid.

The use of ozone as oxidant is reported in: J.M.A. Sales et al, Precipitation of manganese by ozone from hydrometallurgical recycling process of lithium-ion batteries, Journal of Cleaner Production 434 (2024) 140099. However, the reaction with ozone requires the use of gas, which generates a lot of foam during the reaction.

Another alternative is the use of $KMnO_4$ as an oxidizing agent, which is reported in: S. Zandevakili et al, Treatment of valuable metals from leaching solution of spent lithium-ion batteries, Minerals Engineering 173 (2021) 107226. However, this process introduces potassium ions in the solution which contaminates the leached solution.

Another alternative is the use of sodium persulfate, $Na_2S_2O_8$ as an oxidizing agent which is disclosed in EP 4 299 773 A1. However, this process has the same drawback as the use of $KMnO_4$, which is the introduction of sodium into the process.

Solvent extraction is another alternative for manganese separation, which is reported in: C. Peng et al, Recovery of High-Purity MnO2 from the Acid Leaching Solution of Spent Li-Ion Batteries, JOM, Vol. 72, No. 2, 2020. However, there are some disadvantages to solvent extraction, as the process requires the use of solvents, which can add complexity and cost to the overall process. In addition, the extraction and regeneration of solvents may require additional steps and energy consumption.

An alternative agent for manganese precipitation is Caro's acid. For instance, L. Brückner et al, Industrial Recycling of Lithium-Ion Batteries-A Critical Review of Metallurgical Process Routes, Metals 2020, 10, 1107, discloses that manganese can be precipitated as $MnO_2$ by treating a solution containing manganese ions with Caro's acid. Similarly, CA 3156827A1 discloses the precipitation of manganese, cobalt and nickel ions as metal oxyhydroxides by treatment with a peroxymonosulfate salt.

The use of Caro's acid for separating manganese from a material has been studied for feedstock different from lithium-ion battery black mass. For instance, for the recycling of alkaline batteries, which typically use zinc and manganese dioxide ($Zn/MnO_2$) as their primary components, the recovery of Zn and Mn by the treatment of black mass from alkaline batteries with Caro's acid has been reported, wherein Caro's acid is used to dissolve manganese: WO 2012/025568 A2 and EP 2 631 987 A1. Further, WO 2023/083953 A1 relates to a process for separating manganese from a mixed hydroxide precipitate (MHP), containing selectively leaching nickel from MHP by contacting the MHP with an acidic leach solution and with Caro's acid.

In the field of recycling black mass from spent Li-ion batteries, there remains a need for efficient separation and recovery of elements from the black mass. In particular, a process which does not generate any contaminants or by-products or at least only minor amounts thereof is desirable.

## SUMMARY OF THE INVENTION

The present invention relates a method for leaching Co, Ni and Li from a solid S obtainable from a black mass from spent Li-ion batteries, said solid S comprising Ni, Co, Mn and Li, said method comprising contacting the solid S with a sulfur-containing inorganic peracid, such as Caro's acid (peroxymonosulfuric acid) or Marshall's acid (peroxydisuluric acid), thereby obtaining a solution C comprising Co, Ni, and Li on the one hand, and a solid S" comprising Mn on the other hand.

Thus, in contrast to the use of Caro's acid in lithium-ion battery recycling according to the prior art, where Caro's acid is used to precipitate Mn from a solution containing several metal ions, as described above, in the inventive method, Caro's acid is used for selective leaching of Li, Ni and Co from a mixed solid of metal hydroxides. In addition, Caro's acid can be used for the oxidative precipitation of Mn.

Further, the present invention relates to a method for the treatment of a black mass from spent Li-ion batteries comprises the following steps:

- Step 1: leaching nickel, cobalt, lithium, and manganese from the black mass by contacting the black mass with a reducing agent and an acid, thereby obtaining a solution A comprising Ni, Co, Li and Mn on the one hand and a solid byproduct S' on the other hand,
- Step 2: precipitating Ni, Co and Mn and part of Li from the solution A by contacting the solution A with a base, thereby obtaining a solid S comprising Ni, Co, Mn and Li, dispersed in a solution B containing Li, and
- Step 3: leaching Co, Ni, and Li from the solid S, optionally dispersed in the solution B, by contacting the solid S with a sulfur-containing inorganic peracid, thereby obtaining a solution C comprising Co, Ni, and Li on the one hand, and a solid S" comprising Mn on the other hand.

In step 2, next to Ni, Co and Mn, part of Li is precipitated, such that the obtained solid S also contains Li. The solid S is dispersed in solution B and can be separated thereof in optional step 2'. Depending on the process conditions, the amount of Li that is precipitated in step 2 can be rather low and it can be only traces of lithium. The remaining part of lithium remains in the solution B. Accordingly, in step 3, also lithium, e.g. traces of lithium, are leached from the solid S. Thus, the solution C comprises Co, Ni and Li.

Optionally, after step 2, one or both of the following steps, step 2' and step 2" are performed:

- Step 2': optionally separating the solid S from the solution B, thereby obtaining a solid S comprising Ni, Co, Mn and Li on the one hand, and a solution B containing Li on the other hand.

- Step 2": optionally washing the solid S.

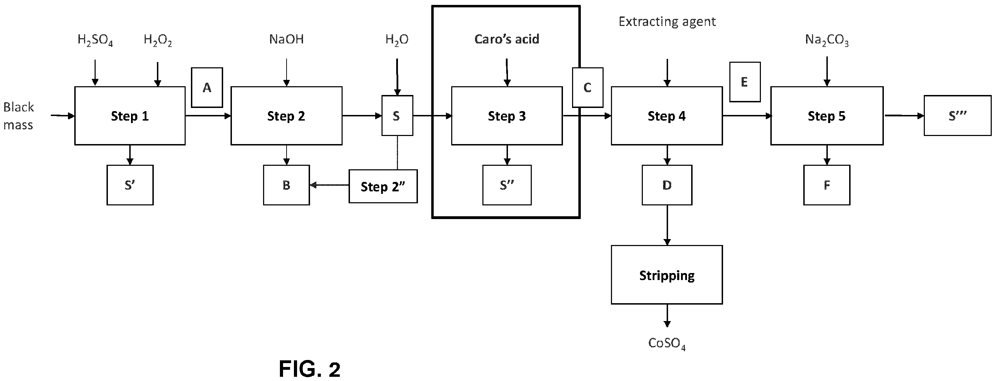

The separation in step 2' can be performed by any suitable method, typically by filtration. The washing solution obtained in step 2" can be combined with the solution B (see Fig. 2). Washing can be performed with any suitable solvent, typically with water.

The present invention aims to separate the manganese after the leaching of cathode material by oxidation with a sulfur-containing inorganic peracid. Manganese is the only element that has a mutually exclusive area of precipitation (without thermodynamically co-precipitation of Li, Ni and Co). Therefore, it can be separated from the other elements by an oxidation-reduction reaction.

A sulfur-containing inorganic peracid, particularly Caro's acid, is a good alternative to ozone, $KMnO_4$ or $Na_2S_2O_8$ as an oxidant agent to oxidize the manganese and separate it from the rest of the metals without contaminating the solution or generating by-products. The added value of Caro's acid is that it is produced by mixing sulfuric acid and hydrogen peroxide, which are the raw materials required for the leaching step. It does not add any contaminants and it does not generate by-products.

Preferred embodiments of the inventive method are described in the following description and in the dependent claims.

## DETAILED DESCRIPTION OF THE INVENTION

Before the method of the invention will be described in detail, it is to be understood that this invention is not limited to specific method conditions described herein, since such conditions may, of course, vary.

It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a compound" means one compound or more than one compound.

The terms "containing", "contains" and "contained of" as used herein are synonymous with "including", "includes" or " comprising", "comprises", and are inclusive or open-ended and do not exclude additional, non-recited members, elements or method steps. It will be appreciated that the terms "containing", "contains", "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt.-%", "weight percentage", or "percentage by weight" are used interchangeably. The same applies to the terms "% by volume", "vol.- %", "vol. percentage", or "percentage by volume", or "% by mol", "mol- %", "mol percentage", or "percentage by mol".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All indications of concentrations, typically given as g/L, refer to standard conditions.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and from different embodiments, as would be understood by those in the art.

Should the disclosure of any patents, patent applications, and publications which are incorporated herein by reference conflict with the description of the present application to the extent that it may render a term unclear, the present description shall take precedence.

## Definitions

### Black mass

The term *"black mass",* particularly black mass of lithium-ion batteries, refers to the dark, powdery substance that results from the recycling process of these batteries. It contains a mixture of valuable metals, including lithium, cobalt, nickel, and manganese, as well as impurities like aluminium and copper.

The composition of black mass can vary significantly due to several factors. Firstly, the diversity in types of lithium-ion batteries and manufacturing scrap results in a mixture of different elements and ratios, including lithium, nickel, iron, titanium, copper, cobalt, manganese, and others, with the commonality being the use of lithium metal. Further, each manufacturer has a unique 'recipe' for their cathodes, cell types, form factors, module types, and pack assemblies tailored for various applications such as cell phones, laptops, and electric vehicles. Currently, the most popular lithium-ion batteries worldwide contain substantial amounts of nickel, cobalt, lithium, and manganese, so black mass produced today will typically have varying concentrations of these elements. The main impurities include aluminium and copper from the electrode foils, and fluorine and phosphorus from the conducting salt and certain plastics. Depending on the sourcing and production methods, black mass may also contain different types of organics and elements from mis-sorted batteries, such as cadmium and lead.

Preferably, the black mass has the following composition:

| Metal | Preferred range of metal concentration in black mass | More preferred range of metal concentration in black mass |
|---|---|---|
| Al | 1 - 8 | 2 - 5 |
| Li | 1 - 8 | 2 - 5 |
| Co | 5 - 30 | 5 - 20 |
| Ni | 5 - 30 | 5 - 20 |
| Mn | 2 - 20 | 3 - 10 |
| Cu | 1 - 8 | 2 - 5 |

**Further definitions**

The term *"alkaline battery"* refers to a type of primary battery that generates electrical energy through the reaction between zinc and manganese dioxide.

The term *"aqueous solution"* refers preferably to a solution in which water is the primary solvent. The term "aqueous" denotes the presence of water, and a solution labelled as such typically contains water as the solvent, with one or more solutes dissolved or suspended within it. Preferably, water as the primary solvent constitutes 51-100 vol.%, more preferably 70-100 vol.% of all solvents present. Typically, in an aqueous solution, water is the only solvent.

The term *"Caro's acid",* also known as peroxymonosulfuric acid ($H_2SO_5$), is a strong oxidant agent, which can be produced by mixing sulfuric acid and hydrogen peroxide.

The term *"extracting agent"* refers to a substance used to selectively remove or separate a desired component from a mixture. It interacts with the target compound, forming a complex or undergoing a chemical reaction that facilitates its isolation from the mixture.

The term *"ICP-OES"* (inductively coupled plasma optical emission spectrometry) is an analytical technique used for detecting and quantifying the concentration of elements in a sample. It involves ionizing the sample with an inductively coupled plasma and measuring the light emitted at specific wavelengths as the elements return to their ground state: In the present application, ICP-OES measurements were conducted as follows: 0.1 g of sample were diluted in 1 ml of concentrated nitric acid and brought to a volume of 50 ml with ultrapure water. A further 20 times dilution was applied for some samples before analysis. The diluted sample solutions were measured by axial-view ICP-OES (Agilent 5800 VDV) against a series of multi-element calibration solutions of increasing concentrations of each analyte. A sample solution aliquot was spiked with a known amount of the elements of interest to check and correct for matrix effects during the measurement.

The term *"leaching"* refers to the process of extracting a substance from a solid material by using a liquid solvent. This technique can be used to separate and remove desired compounds or impurities from a solid mixture by dissolving them in the solvent, leaving behind the insoluble components.

The term *"lithium-ion battery"* is used to describe any type of rechargeable battery that uses lithium ions to transfer energy between the anode and cathode during charging and discharging cycles.

The term *"Marshall's acid",* also known as peroxydisulfuric acid ($H_2S_2O_8$), is a strong oxidant agent, which can be produced by mixing chlorosulfuric acid and hydrogen peroxide. Another known method is the electrolysis of moderately concentrated sulfuric acid (60-70%) with platinum electrodes at high current density and voltage.

The term *"Mixed Hydroxide Precipitate"* (MHP) refers to a solid mixed nickel-cobalt hydroxide precipitate. Such precipitate is generally known as an intermediate product in the commercial processing of nickel containing ores. This precipitate usually comprises a variety of nickel, cobalt and possibly manganese compounds including oxides and hydroxides. Typically, it consists of mostly nickel hydroxide but also contains valuable cobalt hydroxides, possibly manganese, and various other impurities.

The term *"slurry"* refers to a mixture of solid particles suspended in a liquid.

The term *"solution"* refers to a homogeneous mixture composed of two or more substances, where one substance (the solute) is dissolved uniformly in another substance (the solvent). In the context of the present invention, a "solution" can also comprise components in dispersed form, and it is not required that all components are completely dissolved.

The term *"sulfur-containing inorganic peracid"* refers to a class of chemical compounds where a peracid contains sulfur in its molecular structure. Preferred examples are as Caro's acid and Marshall's acid. Caro's acid is particularly preferred.

**Figures**

Figure 1

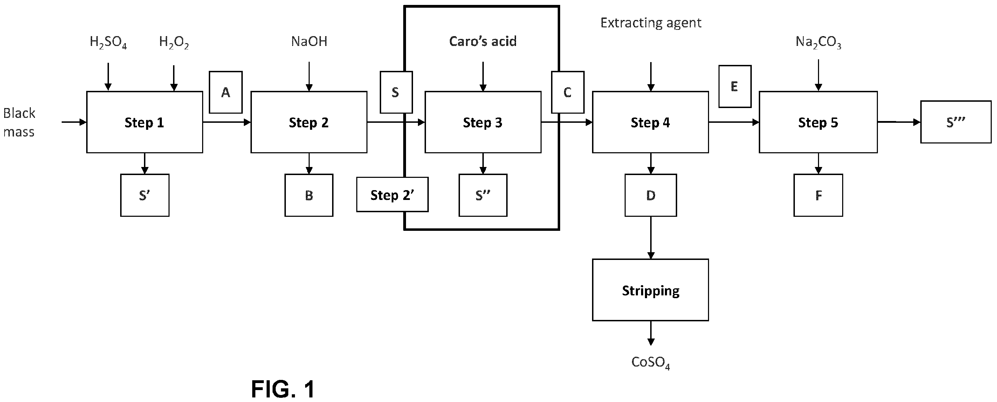

Figure 1 illustrates the inventive method. The rectangle in the middle of the figure highlights the inventive method for leaching Co, Ni and Li from a solid S obtainable from a black mass from spent Li-ion batteries.

In the first step (leaching), black mass from spent Li-ion batteries is treated with acid, preferably sulfuric acid, and a reducing agent, preferably hydrogen peroxide. Thus, a solid by-product (S') comprising graphite is separated from a leached solution (A) comprising a mixture of Li, Ni, Co and Mn in the form of sulfates.

In the second step (Ni, Co, Mn precipitation), the pH value of solution (A) is adjusted, preferably with NaOH, which will precipitate the metals in the following order Ni > Co > Mn > Li. Thus, Ni, Co and Mn and part of Li are precipitated in the form of hydroxide (solid S), and part of Li remains in solution (B) as $LiSO_4$. Further, the solution (B) contains ions from the base used for adjusting the pH value. For instance, if NaOH is used, the solution (B) contains $NaSO_4$. The powder (S) is separated from the liquor (B) by filtration (step 2'). Thus, in this figure, the optional step 2' of separating the solid S from the solution B is performed, and the optional step 2" of washing the solid S is not performed.

In the third step (selective leaching), a sulfur-containing inorganic peracid is added to the powder (S) comprising Ni, Co, Mn and part of the initial Li to selectively leach Ni, Co and Li, leaving Mn in solid form (S") as $MnO_2$. The powder (S") is separated from the liquor (C) by filtration.

Optionally, in a fourth step (cobalt extraction), separation of cobalt and nickel from the liquor (C) obtained in the fourth step is carried out via solvent extraction with an organic extracting agent, resulting in an inorganic solution (E) containing Ni and Li, and an organic solution (D) containing cobalt ions. The solution (D) can be stripped with sulfuric acid to obtain $CoSO_4$.

Optionally, in a fifth step (Li precipitation), lithium that has been precipitated in the second step and thus, is contained in the inorganic solution (E) obtained in the fourth step, is recovered by precipitation with a precipitating agent, such as NaCOs. Thus, a solid (S''') comprising lithium in the form of $LiCO_3$ can be separated from a solution (F) comprising nickel in the form of $NiSO_4$.

Figure 2: This figure shows a modification of the inventive process, wherein in the second step, the optional step 2" of washing the solid S is performed.

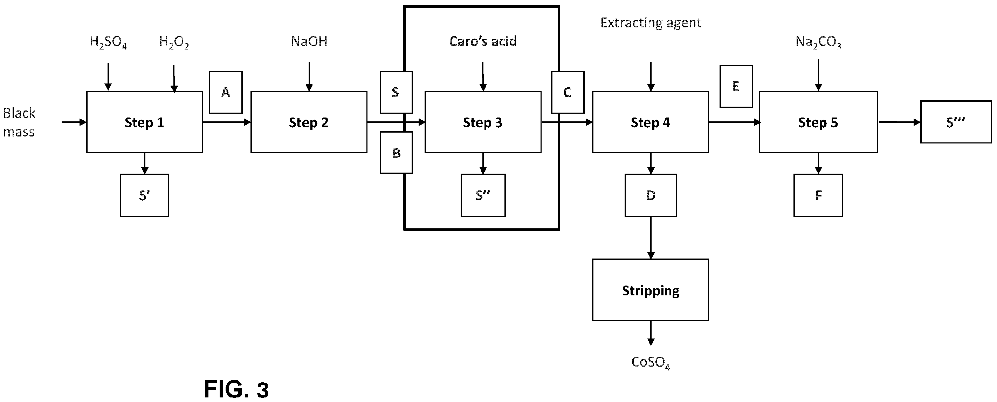

Figure 3: This figure shows a modification of the inventive process, wherein in the second step, neither the optional step 2' of separating the solid S from the solution B nor the optional step 2" of washing the solid S is performed.

## Detailed description of the inventive method

The present invention provides methods for efficient separation and recovery of elements from the black mass obtainable from spent Li-ion batteries. The inventive methods have the advantage that they generate no or only minor amounts of contaminants or by-products. "Minor amounts" means that no contaminants are added by the use of Caro's acid, but in the overall process there might be contaminants from additional chemicals.

The proposed solution is the use of a sulfur-containing inorganic peracid, preferably Caro's acid, also known as peroxymonosulfuric acid ($H_2SO_5$), which is a strong oxidant agent prepared by the reaction between hydrogen peroxide and sulfuric acid. Caro's acid can be generated *in situ* according to the following reaction and it does not introduce any contaminants into the solution.

$$H_2SO_4 + H_2O_2 \rightarrow H_2SO_5 + H_2O$$

Similarly, "Marshall's acid", also known as peroxydisulfuric acid ($H_2S_2O_8$), which is a strong oxidant agent, can be produced by mixing chlorosulfuric acid and hydrogen peroxide according to the following reaction:

$$2\ ClSO_3H + H_2O_2 \rightarrow H_2S_2O_8 + 2\ HCl$$

The present invention relates to a method for leaching Co, Ni and Li from a solid S obtainable from a black mass from spent Li-ion batteries, said solid S comprising Ni, Co, Mn and Li, said method comprising contacting the solid S with a sulfur-containing inorganic peracid, thereby obtaining a solution C comprising Co, Ni, and Li on the one hand, and a solid S" comprising Mn on the other hand.

In the inventive process, reactions in solution, such as the leaching step, are performed in a suitable solvent which is known to the skilled person. Typically, a suitable solvent is water, unless indicated otherwise.

Preferably, during the inventive method, individual elements are contained in the following amounts: Preferably, the black mass comprises Li from 1 to 8 wt% Co from 5 to 30 wt%, Ni from 5 to 30 wt%, and Mn from 2 to 20 wt% based on the total weight of the black mass. Preferably, the black mass further comprises Al from 1 to 8 wt% and/or Cu from 1 to 8 wt%, based on the total weight of the black mass. Further preferred ranges for the elements in black mass are described above in the section "Definitions".

It is to be understood that in cases where the black mass further contains at least one metal from the group consisting of Cu and Al, also the solid S can further contain at least one metal from the group consisting of Cu and Al. Preferably, the solid S further comprises Al from 1 to 8 wt% and/or Cu from 1 to 8 wt%, based on the total weight of the solid S.

Preferably, the solution A comprises Ni, Co, Li and Mn in the following amounts:

- Ni is comprised in the solution A in a weight percentage greater than 0 and less than or equal to 10 wt%, more preferably between 0.5 to 8 wt%, more preferably between 1 to 5 wt%
- Co is comprised in the solution A in a weight percentage greater than 0 and less than or equal to 10 wt%, more preferably between 0.5 to 8 wt%, more preferably between 1 to 5 wt%
- Li is comprised in the solution A in a weight percentage greater than 0 and less than or equal to 1.5 wt%, more preferably between 0.1 to 1.3 wt%, more preferably between 0.2 to 1 wt%
- Mn is comprised in the solution A in a weight percentage greater than 0 and less than or equal to 5 wt%, more preferably between 0.2 to 3 wt%, more preferably between 0.5 to 2 wt%,

wherein wt% are based on the total weight of the solution A.

These concentrations are derived from optimal leaching conditions and can vary depending on the exact composition of the black mass and specific leaching parameters.

Preferably, the solution C comprises Ni, Co, Mn, and Li in the following amounts:

- Ni is comprised in the solution C in a weight percentage greater than 0 and less than or equal to 5 wt%, more preferably between 0.2 to 4 wt%, more preferably between 0.5 to 3 wt%
- Co is comprised in the solution C in a weight percentage greater than 0 and less than or equal to 5 wt%, more preferably between 0.2 to 4 wt%, more preferably between 0.5 to 3 wt%
- Li is comprised in the solution C in a weight percentage greater than 0 and less than or equal to 1 wt%, more preferably between 0.005 to 0.75 wt%, more preferably between 0.01 to 0.5 wt%
- Mn is comprised in the solution C in a weight percentage greater than 0 and less than or equal to 0.2 wt%, more preferably between 0.0001 to 0.15 wt%, more preferably between 0.0001 to 0.1 wt%

wherein wt% are based on the total weight of the solution C.

The solid S" comprises Ni, Co, Li and Mn in the following amounts:

- Ni is comprised in the solid S" in a weight percentage greater than 0 and less than or equal to 15 wt%, more preferably between 0.25 to 10 wt%, more preferably between 0.5 to 5 wt%
- Co is comprised in the solid S" in a weight percentage greater than 0 and less than or equal to 15 wt %, more preferably between 0.25 to 12.5 wt%, more preferably between 0.5 to 10 wt%
- Li is comprised in the solid S" in a weight percentage greater than 0 and less than or equal to 0.5 wt %, more preferably between 0.001 to 0.3 wt%, more preferably between 0.001 to 0.1 wt%
- Mn is comprised in the solid S" in a weight percentage of from 5 % and less than or equal to 40 wt %, more preferably between 7.5 to 35 wt%, more preferably between 10 to 30 wt%

wherein wt% are based on the total weight of the solid S".

Preferably, in the inventive method, the solid S comprises Ni, Co, Mn and Li in the following amounts:

- Ni is comprised in the solid S in a weight amount greater than 0 and less than or equal to 30 percent, more preferably in a weight amount greater than 2 and less than or equal to 20 percent, more preferably in a weight amount greater than 5 and less than or equal to 15 percent, based on the total weight of the solid S;

- Co is comprised in the solid S in a weight amount greater than 0 and less than or equal to 30 percent, more preferably in a weight amount greater than 5 and less than or equal to 25 percent, more preferably in a weight amount greater than 10 and less than or equal to 20 percent, based on the total weight of the solid S;

- Mn is comprised in the solid S in a weight amount greater than 0 and less than or equal to 20 percent, more preferably in a weight amount greater than 1 and less than or equal to 15 percent, more preferably in a weight amount greater than 2 and less than or equal to 10 percent, based on the total weight of the solid S; and

- Li is comprised in the solid S in a weight amount of greater than 0 and less than or equal to 1 percent, more preferably in a weight amount greater than 0.1 and less than or equal to 0.75 percent, more preferably in a weight amount greater than 0.2 and less than or equal to 0.5 percent, based on the total weight of the solid S.

Preferably, the solid S is obtainable by the following steps:

- Step 1: leaching nickel, cobalt, lithium, and manganese from the black mass by contacting the black mass with a reducing agent and an acid, thereby obtaining a solution A comprising Ni, Co, Li and Mn on the one hand and a solid byproduct S' on the other hand,
- Step 2: precipitating Ni, Co, Mn and part of Li from the solution A by contacting the solution A with a base, thereby obtaining a solid S comprising Ni, Co, Mn and Li, dispersed in a solution B containing Li.

Further, the present invention relates to a method for the treatment of a black mass from spent Li-ion batteries comprises the following steps:

- Step 1: leaching nickel, cobalt, lithium, and manganese from the black mass by contacting the black mass with a reducing agent, preferably hydrogen peroxide, and an acid, preferably sulphuric acid, thereby obtaining a solution A comprising Ni, Co, Li and Mn on the one hand and a solid by product S' on the other hand,
- Step 2: precipitating Ni, Co, Mn and part of Li from the solution A by contacting the solution A with a base, preferably NaOH, thereby obtaining a solid S comprising Ni, Co, Mn and Li, dispersed in a solution B containing Li, and
- Step 3: leaching Co, Ni, and Li from the solid S, optionally dispersed in the solution, by contacting the solid S with a sulfur-containing inorganic peracid, thereby obtaining a solution C comprising Co, Ni, and Li on the one hand, and a solid S" comprising Mn on the other hand.

As outlined above, optionally, after step 2, one or both of step 2' and step 2" are performed.

Step 1

The first step for the recovery of metals (Li, Ni, Co, Mn, and optionally further metals such as Al or Cu) from black mass is the leaching of metals with acid, preferably sulfuric acid, and a reducing agent, preferably hydrogen peroxide.
In step 1, the reducing agent can be hydrogen peroxide, sulfur dioxide, ammonium or alkali metal bisulfite (such as sodium bisulfite), ammonium or alkali metal thiosulfate (such as sodium thiosulfate) or sugar (such as glucose). Preferably, the reducing agent is hydrogen peroxide. Preferably, the reducing agent is added in the form of an aqueous solution of the reducing agent.
Preferably, the reducing agent is contained in the aqueous solution in a concentration of 20-80 wt%, more preferably 30-70 wt%, more preferably 40-60 wt%. Preferably, the reducing agent is added in the leaching solution in an amount of 0.5 - 10 %vol, more preferably between 1-5 %vol, more preferably between 1-4 %vol, based on the total volume of the leaching solution.
In step 1, the acid can be sulfuric acid, nitric acid, hydrochloric acid, phosphoric acid, carbonic acid or carboxylic acid, such as citric acid, acetic acid, formic acid, DL malic acid, succinic acid, tartaric acid or ascorbic acid. Preferably, the acid is sulfuric acid. Preferably, the acid is added in the form of an aqueous solution of the acid. Preferably, the acid is sulfuric acid and is added in the leaching solution at a concentration of 1 - 4 M.
Preferably, in step 1, the acid in used in a concentration of 1 - 8 M, more preferably 1 - 4 M, more preferably 1 - 2 M, and/or the reducing agent is used in a concentration of 1 - 5 %vol. The concentration in M for the acid and the concentration in %vol for the reducing agent refer to the concentration in the leach solution, i.e. the overall solution comprising acid and reducing agent.

Step 2

The leached solution (A) is a mixture of sulfate metals in acidic media, and to be able to separate the manganese the next step is to adjust the pH of solution (A), preferably with NaOH, which will precipitate the metals in the following order Ni > Co > Mn > Li.
In step 2, the base can be any suitable organic or inorganic base known to the skilled person. Preferably, the base is an inorganic base. More preferably, the base is sodium hydroxide, ammonium hydroxide, potassium hydroxide, sodium carbonate, sodium bicarbonate. More preferably, the base is an alkaline hydroxide. More preferably, the base is KOH or NaOH. Preferably, the base is added in the form of an aqueous solution of the base. Preferably, the base is contained in the aqueous solution in a concentration of 1 - 8 M, more preferably 1 - 5 M, more preferably 1 - 3 M, more preferably around 2 M. The amount of base to be added is determined by the desired pH value, as described in the following.
Preferably, in step 2, the base is added until the solution A has a pH value of 8-9, to ensure the precipitation of the metals Ni, Co and Mn.

To ensure precipitation of manganese, the final pH required is at least pH 8, as indicated in Table 2, where more than 99% of nickel and cobalt precipitated. At pH 8, part of Mn remains in solution, and metal recovery into the solid is 89%, as shown in Table 2.

Nickel, cobalt, and manganese precipitate in the form of hydroxide. The powder (S) is dispersed in solution (B) and can be separated from the liquor (B) by filtration. The liquor contains the $LiSO_4$ previously leached from the black mass with $NaSO_4$ form after the addition of NaOH. Part of the lithium also precipitates at pH 8, 14.7% which can be recovered at the end of the method by precipitation with a precipitating agent, such as $NaCO_3$ (Table 2).

Step 3

Preferably, in step 3, the solid S is treated with water to prepare an aqueous slurry before the sulfur-containing inorganic peracid is added, and the sulfur-containing inorganic peracid is added to the slurry until the slurry has a pH value of 1-2, to ensure the dissolution of nickel and cobalt, but prevent the dissolution of manganese.

Preferably, the prepared slurry has a density of 75 - 250 g/l, more preferably 100 - 200 g/l, meaning the weight of solid (g) per volume of solvent (l), typically water.

Preferably, in step 3, Caro's acid is prepared in situ from $H_2SO_4$: and $H_2O_2$ in the molar ratio range of $H_2SO_4:H_2O_2$ = 3: 1 to $H_2SO_4:H_2O_2$ = 5:1, depending on the ratio of the metal in the solid S, the higher the concentration of Ni and Co, the higher the ratio of $H_2SO_4:H_2O_2$ to ensure the amount of acid to leach the metals. Preferably, the sulfur-containing inorganic peracid, e.g.

Caro's acid, is added in the form of an aqueous solution. Preferably, the concentration of the sulfur-containing inorganic peracid, e.g. peroxymonosulfuric acid in the equilibrium solution is in a concentration of 5 - 20% w/w, more preferably 7 - 15% w/w, more preferably around 10% w/w, based on the total weight of the solution. The amount of the sulfur-containing inorganic peracid to be added will depend on the metal composition of the solid S. Ideally with a molar ratio of $H_2SO_5:Mn = 1$ or a molar ratio of $H_2S_2O_8:Mn = 0.5$ to ensure the oxidation of manganese. The addition of the sulfur-containing inorganic peracid to the slurry of solid S will decrease the pH, the final pH should be between 1.5-2 to ensure the dissolution of Ni and Co and to avoid the dissolution of Mn.

It is to be understood that any features described in this application in connection with step 3 also apply to the inventive method for leaching Co, Ni and Li from a solid S obtainable from a black mass from spent Li-ion batteries, said solid S comprising Ni, Co, Mn and Li, said method comprising contacting the solid S with a sulfur-containing inorganic peracid, thereby obtaining a solution C comprising Co, Ni, and Li on the one hand, and a solid S" comprising Mn on the other hand, and vice versa.

Steps 4 and 5

After the treatment with the sulfur-containing inorganic peracid, the obtained solution C can be further treated as follows to recover further elements:
Preferably, the inventive method further comprises the following step:

- Step 4: extracting Co from solution C with an organic extracting agent, thereby obtaining an organic solution D comprising Co on the one hand, and an inorganic solution E comprising Ni and Li on the other hand.

In step 4, the organic extracting agent can be C1 - C20 alkylated phosphorus-containing acids. It is preferably chosen from C1 - C20 alkylated phosphoric acids, C1 - C20 alkylated phosphonic acids and C1 - C20 alkylated phosphinic acids, and combinations thereof. Examples thereof include Di(2-ethylhexyl)phosphoric acid (D2EHPA), Mono-2-ethylhexyl (2-ethylhexyl)phosphonate (PC 88A) and bis(2,4,4-trimethylpentyl)phosphinic acid (Cyanex 272). Preferably, the organic extracting agent is bis(2,4,4-trimethylpentyl)phosphinic acid (Cyanex-272). Preferably, the extracting agent is added in solution, wherein suitable solvents are known to the skilled person.

Preferably, the inventive method further comprises the following step:

- Step 5: precipitating Li from the inorganic solution E with a precipitating agent, preferably sodium carbonate, thereby obtaining a solid S‴ comprising Li on the one hand, and a solution F comprising Ni on the other hand.

Suitable reaction conditions for the individual steps of the inventive method are described in the Example below under the section "General procedure". These reaction conditions are not limited to the specific example of this application but are suitable for the inventive method in general.

As is shown in the examples, the inventive methods have the advantage that high recovery rates of metals are achieved, and an efficient separation of the valuable elements contained in black mass is achieved. Further, the inventive methods have inter alia the following benefits:

- The precipitation step allows the recovery of lithium in the form of LiSO$_4$, the raw material for the production of new batteries.
- It reduces the amount of Na$_2$CO$_3$ at the end of the process, which can lead to the formation of CO$_2$ in the downstream process and/or reduce carbonate species presence downstream.
- It allows the separation of sodium from the rest of the metals, which can interfere during the solvent extraction process.
- The addition of a sulfur-containing inorganic peracid, such as Caro's acid, does not introduce any contaminants to the solution, no sodium or potassium which can interfere during the solvent extraction step.

**Example 1**

The efficiency of the inventive method for leaching Co, Ni and Li from a solid obtainable from a black mass from spent Li-ion batteries by contacting the solid with Caro's acid can be determined by the following procedure.

General procedure

First step: Leaching step

The leaching step with an acid, preferably sulfuric acid, and a reducing agent, preferably hydrogen peroxide.
Suggested conditions:

a. Acid concentration: 1 M (suitable general range: 1 - 8 M, depending on the type of acid used, e.g. 1 - 4 M for sulfuric acid)
b. Hydrogen peroxide concentration (using a 50 wt% aqueous solution): 1.5 %vol (suitable general range: 1 - 5 %vol)
c. Temperature: 70°C (suitable general range: 40 - 100°C)
d. Time: 90 min (suitable general range: 30 - 120 min)
e. Slurry density: 100 g/l (suitable general range: 100 - 200 g/l)

Second step. Metal precipitation with sodium hydroxide

The metals precipitate in the following order by increasing the pH of the solution: Ni, Co, Mn, and the last one Li. By adjusting the final pH, it is possible to separate lithium from the rest of the metals.

a. NaOH (2M) until the pH of the dissolution is 8.
b. Temperature: 70°C
c. Time: 60 min

Third step: Selective leaching with Caro's acid

It is possible to selectively leach nickel, cobalt, and copper with Caro's acid, leaving manganese in the solid. Caro's acid composition contains H$_2$SO$_5$ in equilibrium with H$_2$SO$_4$ and H$_2$O$_2$. A test was performed where Caro's acid was progressively added to the slurry containing the solid from the precipitation test at pH 8 until the final pH of the slurry was between 1.5-2.
Conditions:

a. Caro's acid molar ratio (H$_2$SO$_4$:H$_2$O$_2$) = 3:1
b. H$_2$SO$_5$ concentration in Caro's acid: 10% w/w
c. Temperature: 70°C
d. Slurry density: 100 g/l

The black mass composition used for the test had the following composition:

| Metal | Weight Percentage in black mass (wt%) |
|---|---|
| Al | 3 |
| Li | 2.2 |
| Co | 17.7 |
| Ni | 10.2 |

(continued)

| Metal | Weight Percentage in black mass (wt%) |
|---|---|
| Mn | 5.9 |
| Cu | 3.4 |

**Step 1** - **Leaching step:**

The first test is the leaching step, where the metals from the black mass are leached with sulfuric acid and hydrogen peroxide.

35 grams of black mass was introduced into a reactor with a double jacket and a mechanical stirring at 300 RPM. The temperature was set to 50°C. The sulfuric acid solution was prepared and introduced into the reactor and after 10 minutes, the addition of hydrogen peroxide started, which was dosed progressively for over 20 minutes. Samples were taken every 1, 5, 10, 15, 30, 60, and 90 minutes for the analysis of the metal concentration. After 90 minutes, the reaction stopped and it was left to cool down. Once it reached room temperature the solution was filtered, the leachate was collected and then powder residue was washed with demi-water. The powder residue was introduced in the oven for 48 hours at 65°C. The concentration of metals of the leachate, the wash solution and the powder residue was measured by ICP-OES.

Table 1: Amounts of metals in solution A and solid S' after step 1.

| Metal | Leach Solution (wt%) | Recovery * (%) |
|---|---|---|
| Li | 0.23 | 98.9 |
| Ni | 1.1 | 95.8 |
| Co | 1.8 | 99.5 |
| Mn | 0.58 | 99.8 |
| Cu | 0.28 | 99.2 |
| * The percentage of recovery (metal dissolution) is calculated as follows:Metal dissolution (%) = (Metal in leachate (g) + metal in wash solution (g)) / (Metal in leachate (g) + metal in wash solution (g) + Metal in powder residue (g)) x 100 | | |

**Step 2 - Precipitation step:**

In the second step, metals are precipitated with sodium hydroxide.

The leached solution was introduced into the reactor, and heated at 70°C. Once the solution reached the set temperature, NaOH (2M) was introduced progressively into the reactor and the pH was monitored during the reaction. When the solution reached pH 8, the addition of NaOH (2M) was stopped as well as the heating. Then the solution was filtered after it was cooled down, and washed with demi-water. The obtained solid is humid and has a green color while the filtrate is colorless. Part of the solid was dried in the oven at 65°C for 24 hours. The concentration of metals was measured to the leachate and the dried solid by ICP-OES.

Table 2: Amounts of metals in solution B and solid S after step 2.

| Metal | Leach Solution Composition (wt%) | Solid Composition S (dry) (wt%) | Metal Recovery into Solids* (%) |
|---|---|---|---|
| Li | 0.04 | 0.28 | 14.72 |
| Ni | 0.00 | 8.97 | 99.83 |
| Co | 0.00 | 15.52 | 99.13 |
| Mn | 0.01 | 4.42 | 88.64 |
| Cu | 0.00 | 1.93 | 99.41 |
| * The percentage of recovery (metal precipitation) is calculated as follows:Metal precipitation (%) = (Metal in solid S (g)) / (Metal in leachate (g) + metal in wash solution (g) + Metal in solid S (g)) x 100 | | | |

**Step 3 - Selective Acid Leaching**

In the third step, nickel, cobalt, and copper are selectively leached with Caro's acid, leaving manganese in the solid.

The wet precipitate from the precipitation step is introduced into the reactor and then the water to reach a slurry density of 10% w/w. A slurry density of 10% w/w means that the slurry contains 10 wt% solid and 90 wt% solvent, typically water. The temperature of the reaction was set at 70°C and it was mixed with a mechanical stirrer at 300 RPM.

Once the reaction reached 70°C, the progressive addition of Caro's acid started, which was previously prepared using a molar ratio of $H_2SO_4:H_2O_2$ of 3:1, and then diluted with water to 10% w/w peroxymonosulfuric acid. The addition of Caro's acid continued until the reaction reached pH 2.

After the reaction the solution was filtered, the leachate was collected and then powder residue was washed with demi-water. The powder residue was introduced in the oven for 48 hours at 65°C.The concentration of metals was measured by ICP-OES of the leachate, the wash solution and the solid residue.

Table 3: Amounts of metals in solution C and solid S" after step 3.

| Metal | Solution Composition (wt%) | Solid Composition (wt%) | Metal Recovery into Solution* (%) |
|---|---|---|---|
| Li | 0.02 | 0.09 | 93.37 |
| Ni | 0.58 | 3.65 | 91.63 |
| Co | 1.00 | 9.65 | 87.77 |
| Mn | 0.01 | 18.70 | 3.84 |
| Cu | 0.16 | 1.00 | 91.69 |
| * The percentage of recovery (metal dissolution) is calculated as follows:Metal dissolution (%) = (Metal in leachate (g) + metal in wash solution (g)) /(Metal in leachate (g) + metal in wash solution (g) + Metal in powder residue (g)) x 100 | | | |

As shown by the Example, with the inventive method, high recovery rates of metals are achieved in the individual steps. Therefore, an efficient separation of the valuable elements contained in black mass from spent Li-ion batteries can be accomplished. Further, the process which does not generate any contaminants or by-products or at least only minor amounts thereof.

**Claims**

1. A method for leaching Co, Ni and Li from a solid S obtainable from a black mass from spent Li-ion batteries, said solid S comprising Ni, Co, Mn and Li, said method comprising contacting the solid S with a sulfur-containing inorganic peracid, thereby obtaining a solution C comprising Co, Ni, and Li on the one hand, and a solid S" comprising Mn on the other hand.

2. The method according to claim 1, wherein:

   - Ni is comprised in the solid S in a weight amount greater than 0 and less than or equal to 30 percent, based on the total weight of the solid S;
   - Co is comprised in the solid S in a weight amount greater than 0 and less than or equal to 30 percent, based on the total weight of the solid S;
   - Mn is comprised in the solid S in a weight amount greater than 0 and less than or equal to 20 percent, based on the total weight of the solid S; and
   - Li is comprised in the solid S in a weight amount greater than 0 and less than or equal to 1 percent, based on the total weight of the solid S.

3. The method of claim 1 or 2, wherein the solid S is obtainable by the following steps:

   - Step 1: leaching nickel, cobalt, lithium, and manganese from the black mass by contacting the black mass with a reducing agent and an acid, thereby obtaining a solution A comprising Ni, Co, Li and Mn on the one hand and a solid byproduct S' on the other hand,

- Step 2: precipitating Ni, Co, Mn and part of Li from the solution A by contacting the solution A with a base, thereby obtaining a solid S comprising Ni, Co, Mn and Li, dispersed in a solution B containing Li,
- Step 2': optionally separating the solid S from the solution B, thereby obtaining a solid S comprising Ni, Co, Mn and Li on the one hand, and a solution B containing Li on the other hand,
- Step 2": optionally washing the solid S.

4. A method for the treatment of a black mass from spent Li-ion batteries comprising the following steps:

- Step 1: leaching nickel, cobalt, lithium, and manganese from the black mass by contacting the black mass with a reducing agent and an acid, thereby obtaining a solution A comprising Ni, Co, Li and Mn on the one hand and a solid byproduct S' on the other hand,
- Step 2: precipitating Ni, Co, Mn and part of Li from the solution A by contacting the solution A with a base, thereby obtaining a solid S comprising Ni, Co, Mn and Li, dispersed in a solution B containing Li,
- Step 2': optionally separating the solid S from the solution B, thereby obtaining a solid S comprising Ni, Co, Mn and Li on the one hand, and a solution B containing Li on the other hand,
- Step 2": optionally washing the solid S, and
- Step 3: leaching Co, Ni, and Li from the solid S, optionally dispersed in the solution B, by contacting the solid S with a sulfur-containing inorganic peracid, thereby obtaining a solution C comprising Co, Ni, and Li on the one hand, and a solid S" comprising Mn on the other hand.

5. The method according to claim 3 or 4, wherein the black mass comprises Li from 1 to 8 wt%, Co from 5 to 30 wt%, Ni from 5 to 30 wt%, and Mn from 2 to 20 wt%, based on the total weight of the black mass.

6. The method according to claim 5, wherein the black mass further comprises Al from 1 to 8 wt% and/or Cu from 1 to 8 wt%, based on the total weight of the black mass.

7. The method according to any of claims 3 to 6, wherein the solution A comprises Ni, Co and Li and Mn in the following amounts:

- Ni is comprised in the solution A in a weight percentage greater than 0 and less than or equal to 10 wt%,
- Co is comprised in the solution A in a weight percentage greater than 0 and less than or equal to 10 wt%,
- Li is comprised in the solution A in a weight percentage greater than 0 and less than or equal to 1.5 wt%,
- Mn is comprised in the solution A in a weight percentage greater than 0 and less than or equal to 5 wt%,

wherein wt% are based on the total weight of the solution A.

8. The method according to any of claims 3 to 7, wherein

the solution C comprises Ni, Co, Li and Mn in the following amounts:

- Ni is comprised in the solution C in a weight percentage greater than 0 and less than or equal to 5 wt%,
- Co is comprised in the solution C in a weight percentage greater than 0 and less than or equal to 5 wt%,
- Li is comprised in the solution C in a weight percentage greater than 0 and less than or equal to 1 wt%,
- Mn is comprised in the solution C in a weight percentage greater than 0 and less than or equal to 0.2 wt%,

wherein wt% are based on the total weight of the solution C, and/or
the solid S" comprises Ni, Co, Li and Mn in the following amounts:

- Ni is comprised in the solid S" in a weight percentage greater than 0 and less than or equal to 15 wt%,
- Co is comprised in the solid S" in a weight percentage greater than 0 and less than or equal to 15 wt%,
- Li is comprised in the solid S" in a weight percentage greater than 0 and less than or equal to 0.5 wt%,
- Mn is comprised in the solid S" in a weight percentage of from 5 % and less than or equal to 40 wt%, ,

wherein wt% are based on the total weight of the solid S".

9. The method according to any of claims 3 to 8, further comprising the following step:
Step 4: extracting Co from solution C with an organic extracting agent, thereby obtaining an organic solution D comprising Co on the one hand, and an inorganic solution E comprising Ni and Li on the other hand.

10. The method according to claim 9 further comprising the following step:
    Step 5: precipitating Li from the inorganic solution E with a precipitating agent, thereby obtaining a solid S‴ comprising Li on the one hand, and a solution F comprising Ni on the other hand.

11. The method according to any of claims 3 to 10, wherein in Step 1,

    the acid in used in a concentration of 1 - 8 M and/or
    the reducing agent is used in a concentration of 1 - 5 %vol, each based on the total leaching solution.

12. The method according to any of claims 3 to 11, wherein in Step 2, the base is added until the solution A has a pH value of 8-9.

13. The method according to any of claims 3 to 12, wherein in Step 3,

    the solid S is treated with water to prepare an aqueous slurry before the sulfur-containing inorganic peracid is added, and
    the sulfur-containing inorganic peracid is added to the slurry until the slurry has a pH value of 1-2.

FIG. 1

**FIG. 2**

FIG. 3

Europäisches
Patentamt

European
Patent Office

Office européen
des brevets

# EUROPEAN SEARCH REPORT

**Application Number**

EP 24 18 2005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2022 0079922 A (COMMISSARIAT ENERGIE ATOMIQUE [FR]) 14 June 2022 (2022-06-14) * paragraph [0023] - paragraph [0029] * * paragraph [0039] - paragraph [0042] * * claims 1-24 * | 1-13 | INV. C22B3/44 C22B7/00 C22B26/12 H01M4/525 H01M10/052 |
| Y | WO 2024/083881 A1 (UMICORE NV [BE]) 25 April 2024 (2024-04-25) * claims 1-3 * | 1-13 | H01M10/54 C22B3/00 C22B47/00 |
| Y | WO 2023/083953 A1 (SOLVAY [BE]) 19 May 2023 (2023-05-19) * claim 1 to 15 * | 1-13 | |
| A | CN 109 852 807 A (INST PROCESS ENG CAS) 7 June 2019 (2019-06-07) * the whole document * | 1-13 | |
| A | CN 110 512 080 A (JINCHUAN GROUP CO LTD; LANZHOU JINCHUAN TECH PARK CO LTD) 29 November 2019 (2019-11-29) * the whole document * | 1-13 | TECHNICAL FIELDS SEARCHED (IPC) |
| A | CA 2 949 580 A1 (BHP BILLITON NICKEL WEST PTY LTD [AU]) 9 June 2017 (2017-06-09) * the whole document * | 1-13 | C22B H01M |
| A | US 4 394 357 A (MOUNSEY DIANA M [GB] ET AL) 19 July 1983 (1983-07-19) * the whole document * | 1-13 | |
| A | GB 2 088 842 A (INTEROX CHEMICALS LTD) 16 June 1982 (1982-06-16) * the whole document * | 1-13 | |

-/--

The present search report has been drawn up for all claims

| Place of search | Date of completion of the search | Examiner |
|---|---|---|
| The Hague | 15 November 2024 | Martinez Miró, M |

EPO FORM 1503 03.82 (P04C01)

page 1 of 2

Europäisches
Patentamt

European
Patent Office

Office européen
des brevets

**EUROPEAN SEARCH REPORT**

**Application Number**

**EP 24 18 2005**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG ET AL: "Manganese metallurgy review. Part II: Manganese separation and recovery from solution", HYDROMETALLURGY, ELSEVIER SCIENTIFIC PUBLISHING CY. AMSTERDAM, NL, vol. 89, no. 3-4, 25 October 2007 (2007-10-25), pages 160-177, XP022314560, ISSN: 0304-386X, DOI: 10.1016/J.HYDROMET.2007.08.009 * the whole document * | 1-13 | |
| A | WO 2019/161448 A1 (NMR 360 INC [CA]; URBAN MINING PTY LTD [AU]) 29 August 2019 (2019-08-29) * the whole document * | 1-13 | |
| A | WO 2012/025568 A2 (AKKUSER OY [FI]; PUDAS JARMO [FI]) 1 March 2012 (2012-03-01) * the whole document * | 1-13 | |
| A | KR 2024 0049385 A (AURUBIS AG [DE]) 16 April 2024 (2024-04-16) * the whole document * | 1-13 | TECHNICAL FIELDS SEARCHED (IPC) |

The present search report has been drawn up for all claims

| Place of search | Date of completion of the search | Examiner |
|---|---|---|
| The Hague | 15 November 2024 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2005

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| KR 20220079922 A | | 14-06-2022 | CA | 3156827 A1 | 15-04-2021 |
| | | | CN | 114585756 A | 03-06-2022 |
| | | | EP | 4041926 A1 | 17-08-2022 |
| | | | FR | 3102008 A1 | 16-04-2021 |
| | | | JP | 2022552492 A | 16-12-2022 |
| | | | KR | 20220079922 A | 14-06-2022 |
| | | | US | 2022411896 A1 | 29-12-2022 |
| | | | WO | 2021069822 A1 | 15-04-2021 |
| WO 2024083881 A1 | | 25-04-2024 | NONE | | |
| WO 2023083953 A1 | | 19-05-2023 | AU | 2022387821 A1 | 09-05-2024 |
| | | | CA | 3236078 A1 | 19-05-2023 |
| | | | CN | 118234877 A | 21-06-2024 |
| | | | EP | 4430217 A1 | 18-09-2024 |
| | | | KR | 20240107182 A | 08-07-2024 |
| | | | WO | 2023083953 A1 | 19-05-2023 |
| CN 109852807 A | | 07-06-2019 | NONE | | |
| CN 110512080 A | | 29-11-2019 | NONE | | |
| CA 2949580 A1 | | 09-06-2017 | AU | 2016256773 A1 | 29-06-2017 |
| | | | CA | 2949580 A1 | 09-06-2017 |
| US 4394357 A | | 19-07-1983 | AU | 551632 B2 | 08-05-1986 |
| | | | BE | 891308 A | 01-06-1982 |
| | | | BR | 8107899 A | 08-09-1982 |
| | | | CA | 1180903 A | 15-01-1985 |
| | | | FI | 71348 B | 09-09-1986 |
| | | | FR | 2495602 A1 | 11-06-1982 |
| | | | NL | 8105475 A | 01-07-1982 |
| | | | PH | 18732 A | 16-09-1985 |
| | | | US | 4394357 A | 19-07-1983 |
| | | | ZA | 817952 B | 27-10-1982 |
| | | | ZW | 28381 A1 | 24-02-1982 |
| GB 2088842 A | | 16-06-1982 | NONE | | |
| WO 2019161448 A1 | | 29-08-2019 | NONE | | |
| WO 2012025568 A2 | | 01-03-2012 | NONE | | |
| KR 20240049385 A | | 16-04-2024 | CA | 3231130 A1 | 16-03-2023 |
| | | | DE | 102021123151 A1 | 09-03-2023 |
| | | | DK | 4225697 T3 | 27-11-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 18 2005

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | | Publication date |
|---|---|---|---|---|
| | | EP | 4225697 A1 | 16-08-2023 |
| | | ES | 2969364 T3 | 17-05-2024 |
| | | FI | 4225697 T3 | 27-11-2023 |
| | | HR | P20231483 T1 | 01-03-2024 |
| | | HU | E064751 T2 | 28-04-2024 |
| | | JP | 2024533154 A | 12-09-2024 |
| | | KR | 20240049385 A | 16-04-2024 |
| | | LT | 4225697 T | 11-12-2023 |
| | | PL | 4225697 T3 | 04-03-2024 |
| | | PT | 4225697 T | 30-11-2023 |
| | | RS | 64856 B1 | 29-12-2023 |
| | | US | 2024270590 A1 | 15-08-2024 |
| | | WO | 2023036726 A1 | 16-03-2023 |

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4299773 A1
- CA 3156827 A1
- WO 2012025568 A2
- EP 2631987 A1
- WO 2023083953 A1

**Non-patent literature cited in the description**

- **J.M.A. SALES et al.** Precipitation of manganese by ozone from hydrometallurgical recycling process of lithium-ion batteries. *Journal of Cleaner Production*, 2024, vol. 434, 140099
- **S. ZANDEVAKILI et al.** Treatment of valuable metals from leaching solution of spent lithium-ion batteries. *Minerals Engineering*, 2021, vol. 173, 107226
- **C. PENG et al.** Recovery of High-Purity MnO2 from the Acid Leaching Solution of Spent Li-Ion Batteries. *JOM*, 2020, vol. 72 (2)
- **L. BRÜCKNER et al.** Industrial Recycling of Lithium-Ion Batteries-A Critical Review of Metallurgical Process Routes. *Metals*, 2020, vol. 10, 1107